# FASCICULE DE BREVET EUROPEEN

(11) **EP 2 331 354 B1**
(45) Date de publication et mention de la délivrance du brevet: **04.07.2012**
(21) Numéro de dépôt: 09813820.9
(22) Date de dépôt: 30.09.2009
(51) Int. Cl.: B60K 1/04

(54) **SYSTEME DE FIXATION D'UN PACK DE BATTERIE ET PROCEDE DE MONTAGE/DEMONTAGE AUTOMATISABLE ASSOCIE**
SYSTEM ZUR BEFESTIGUNG EINES BATTERIEPACKS UND ENTSPRECHENDES AUTOMATISIERTES MONTAGE-/DEMONTAGEVERFAHREN
SYSTEM FOR FIXING A BATTERY PACK AND ASSOCIATED AUTOMATED METHOD OF ASSEMBLY/DISASSEMBLY

(30) Priorité: 07.10.2008 FR 0856797
(43) Date de publication de la demande: 15.06.2011
(73) Titulaire: Renault s.a.s., 92100 Boulogne-Billancourt (FR)
(72) Inventeur: CAPPELLOTTI, Bruno, F-78114 Magny les Hameaux (FR); TRAMET, Jacques, F-78180 Montigny (FR)
(86) Numéro de dépôt international: PCT/FR2009/051856
(87) Numéro de publication internationale: WO 2010/040931

(56) Documents cités:
- EP-A- 1 950 070
- JP-A- 9 120 810

## Description

La présente invention concerne un système de fixation d'un pack de batterie à une caisse telle une caisse de véhicule automobile, ainsi que les procédés de montage/démontage automatisables d'un tel pack batterie.

Un tel système et son procédé sont connus du EP-A-1950070, qui est consideré comme représentant l'état de la technique le plus proche.

Dans le domaine de la fixation des batteries de puissance sur véhicule il n'est connu aucun système/méthode permettant un montage/démontage automatisable.

La présente invention propose de rendre la mise en place initiale et le remplacement d'une batterie de puissance automatisable, c'est-à-dire réalisable sans intervention technique manuelle, par exemple en station service.

L'invention a pour objet un système de fixation d'un pack de batterie à une caisse, ledit pack de batterie comprenant un carter, le carter et la caisse délimitant entre eux un espace apte à accueillir des batteries, ledit carter étant muni d'une pluralité d'au moins un dispositif de fixation du carter sur la caisse selon un axe, chaque dispositif comprenant:
- un arbre solidaire dudit carter tout en étant libre en rotation autour de l'axe relativement audit carter, présentant à une de ses extrémités une forme de centrage de révolution autour de l'axe apte à coopérer avec une forme complémentaire présente sur la caisse, et à son autre extrémité une empreinte apte à accueillir un outil d'entraînement en rotation autour de l'axe;
- une came solidaire de et entraînée par l'arbre en rotation autour de l'axe et présentant une extension sensiblement plane dans un plan perpendiculaire à l'axe apte à venir, en fonction de l'angle de rotation dudit arbre, se loger ou se déloger, dans un logement réalisé dans la caisse sensiblement plan et perpendiculaire à l'axe,
la caisse étant munie d'une même pluralité de forme complémentaire et de logement en regard de chaque dispositif de fixation.

Selon une autre caractéristique avantageuse, chaque dispositif de fixation comprend encore un moyen élastique disposé de manière à être comprimé, selon l'axe, entre le carter et la caisse lors de la mise en place de la came dans le logement, afin de créer, lors de sa détente, une force d'appui de l'extension de ladite came contre la paroi dudit logement.

L'invention concerne encore un procédé de montage automatisable d'un pack de batterie comprenant un tel système de fixation, comprenant les étapes suivantes:
- mise en place du carter équipé de batteries sur une platine, à proximité de la caisse,
- déplacement de la platine afin d'aligner chaque forme de centrage de la pluralité de dispositif de fixation du carter avec une forme complémentaire correspondante de la caisse,
- déplacement de la platine selon l'axe afin d'introduire chaque forme de centrage de la pluralité de dispositif de fixation du carter dans la forme complémentaire correspondante de la caisse,
- rotation de chaque arbre au moyen d'un outil engagé dans chaque empreinte de telle manière à mettre en place chaque came de la pluralité dans chaque logement correspondant,
- retrait de la platine.

L'invention concerne encore un procédé de démontage automatisable d'un pack de batterie comprenant un tel système de fixation, comprenant les étapes suivantes:
- mise en place d'une platine en contact avec le carter,
- rotation de chaque arbre au moyen d'un outil engagé dans chaque empreinte de telle manière à déloger chaque came de la pluralité hors de chaque logement correspondant,
- déplacement de la platine selon l'axe, afin d'extraire chaque forme de centrage de la pluralité de dispositif de fixation du carter de la forme complémentaire correspondante de la caisse,
- retrait de la platine emportant le pack batterie.

Selon une autre caractéristique de l'invention, les procédés de montage et de démontage comprennent encore un déplacement de la platine selon l'axe en comprimant, le cas échéant, chaque moyen élastique, et le retrait de la platine s'effectue en détendant, le cas échéant, chaque moyen élastique.

Un avantage du dispositif selon l'invention est de permettre une automatisation de la mise en place et du remplacement d'un pack batterie de puissance.

Un autre avantage du système est de s'appuyer sur des éléments mécaniques simples assurant une bonne robustesse et une facilité de mise en oeuvre industrielle.

D'autres caractéristiques, détails et avantages de l'invention ressortiront plus clairement de la description détaillée donnée ci-après à titre indicatif en relation avec des dessins sur lesquels :
- la figure 1 présente un exemple de pack batterie en vue de dessus,
- la figure 2 présente ce même pack batterie en vue de côté, et sa mise en place sur le véhicule,
- la figure 3 présente un dispositif de fixation selon l'invention en vue perspective,
- la figure 4 présente le même dispositif en vue éclatée,
- la figure 5 illustre sur un dispositif vu de dessus deux plans de section 1 et 2,
- la figure 6, respectivement 7, présente le dispositif de fixation selon l'invention en vue coupée selon le plan de section 1, respectivement selon le plan de section 2,
- les figures 8 et 9 illustrent deux étapes de la mise en place du dispositif de fixation sur la caisse.

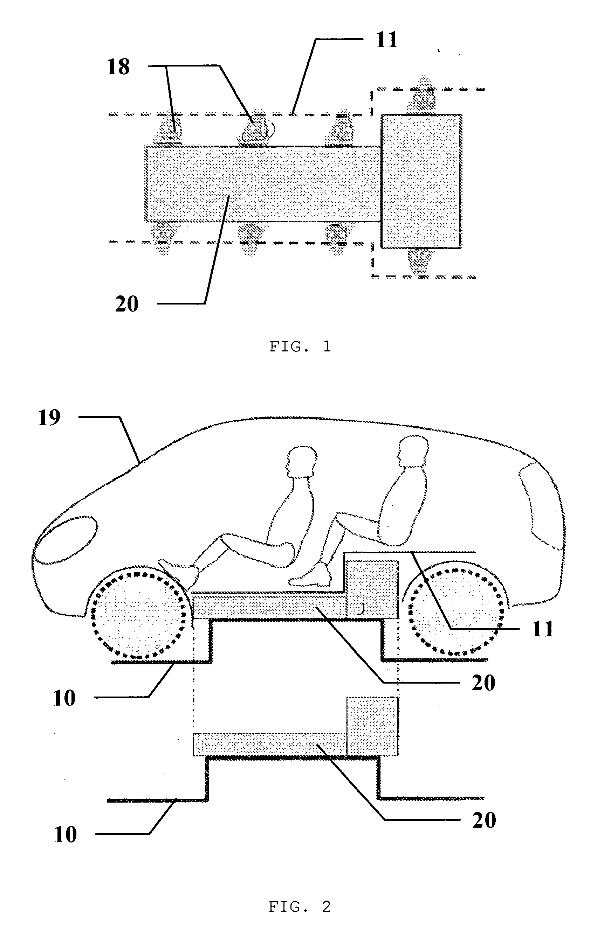

Selon la figure 1, un pack batterie 20 présente une forme pouvant être complexe. Il est selon l'invention équipé d'une pluralité d'au moins un dispositif 18 de fixation, ici au nombre de huit et répartis à sa périphérie, afin de permettre la fixation du pack batterie 20 à la caisse 11.

La figure 2 illustre un exemple de placement dudit pack batterie 20, de manière illustrative, sous le véhicule 19. Une telle mise en place est avantageusement réalisée au moyen d'une platine 10 mobile.

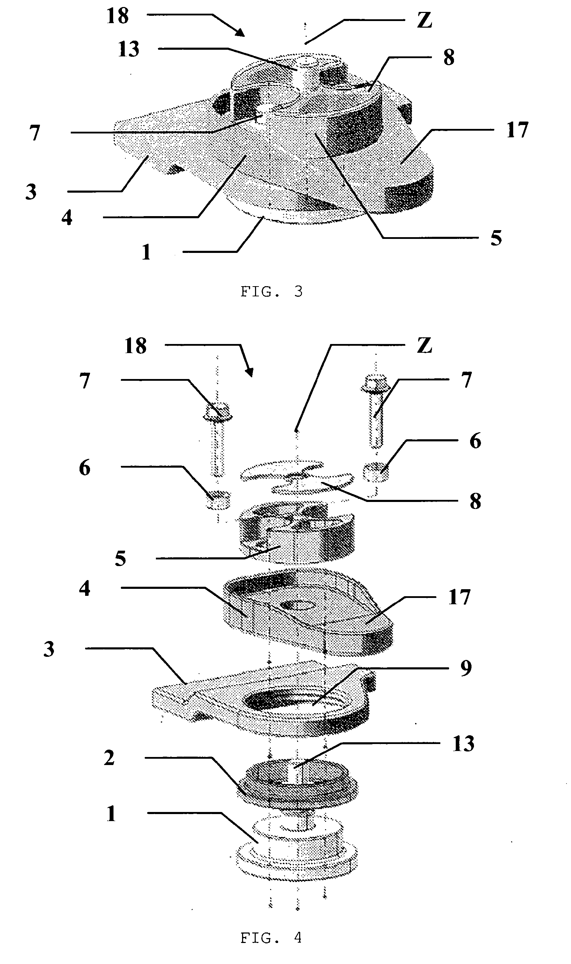

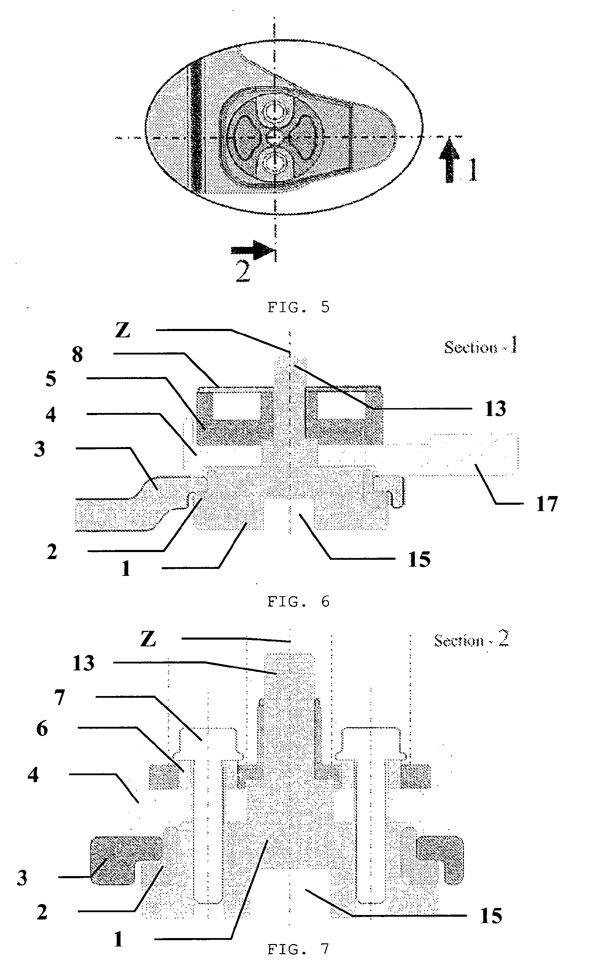

En se référant aux figure 3 et 4 présentant un mode de réalisation préférentiel d'un dispositif de fixation 18, respectivement figuré en vue perspective (figure 3) et en vue éclatée (figure 4), et aux figures 6 et 7 présentant deux sections perpendiculaires du même mode de réalisation, est illustré partiellement un carter 3 solidaire du pack batterie 20. Ledit carter 3 est percé d'un trou circulaire 9. Dans ce trou 9 est placé, le cas échéant au moyen d'une bague de centrage 2, un arbre 1 circulaire d'axe de révolution Z. Ainsi ledit arbre 1 est libre en rotation autour de l'axe Z. Ledit arbre 1 peut être épaulé, comme illustré, afin de venir en butée contre le carter 3. L'arbre 1 présente à une de ses extrémités une forme de centrage 13 de révolution autour de l'axe Z. Cette forme de centrage 13 est apte à coopérer avec une forme complémentaire 14 réalisée sur la caisse 11. Dans l'exemple illustré la forme de centrage 13 est cylindrique saillante, tandis que la forme complémentaire 14 est cylindrique rentrante, de diamètre légèrement supérieur, afin de pouvoir accueillir la forme de centrage 13 se déplaçant selon une translation d'axe Z. Il apparaît que la forme 13, respectivement 14, pourrait être tout autre forme de révolution (par exemple un cône), la forme de centrage 13 pouvant être rentrante et la forme complémentaire pouvant être sortante, tant que les deux formes 13, 14 restent complémentaires l'une de l'autre. A son autre extrémité, l'arbre 1 comprend une empreinte 15 apte à accueillir un outil 12 d'entraînement en rotation autour de l'axe Z. Cette empreinte apparaît mieux sur les figures 6-9.

Sur l'arbre 1 est encore disposé, du côté opposé à l'épaulement relativement au carter 3, une came 4. Cette came 4 est solidaire en rotation de l'arbre 1. Cette solidarisation peut être obtenue au moyen d'un profil prismatique complémentaire de l'arbre 1 et de la came 4 au niveau de leur interface (solution non représentée). Cette solidarisation peut encore être obtenue au moyen d'une fixation de la came 4 sur l'arbre 1 réalisée comme dans l'exemple illustré par deux vis 7. Ladite fixation, en ce qu'elle emprisonne le carter 3 entre la came 4 et l'arbre 1, solidarise le dispositif de fixation 18 avec le carter 3.

La came 4 est sensiblement plane selon un plan perpendiculaire à l'axe Z et sensiblement circulaire dans ce même plan, à l'exception d'une extension 17 s'étendant principalement selon une direction radiale.

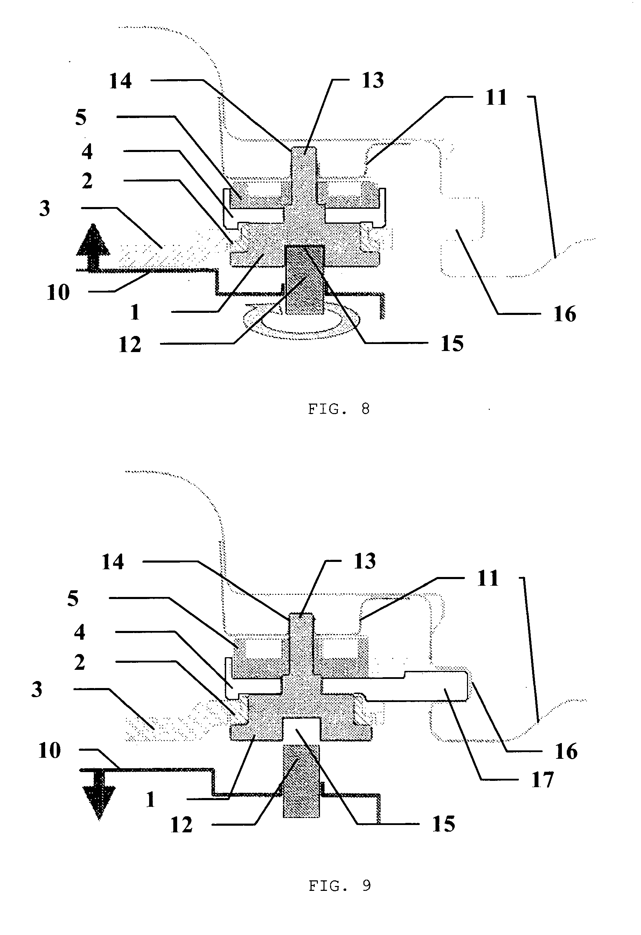

En se référant maintenant aux figures 8 et 9 va être détaillé le mode de fonctionnement dudit dispositif 18 de fixation. L'extension 17 est telle qu'elle est apte, en fonction de l'angle de rotation de la came 4 et dudit arbre 1, à venir se loger ou se déloger, dans un logement 16 réalisé dans la caisse 11, sensiblement plan, perpendiculaire à l'axe Z et disposé en regard de la came 4, lorsque la fome de centrage 13 de l'arbre 1 du dispositif de fixation 18 est engagée dans la forme complémentaire 14.

Les figures 8 et 9 présentent un dispositif de fixation 18, vu de côté en vue coupée, en relation avec un détail de la caisse 11 comportant une forme complémentaire 14 apte à accueillir la forme de centrage 13 de l'arbre 1 et un logement 16. A la figure 8, la came 5 est orientée de telle manière à ce que l'extension 17 soit délogée du logement 16 : le dispositif de fixation est alors déverrouillé. A contrario, à la figure 9, la came 5 est orientée de telle manière à ce que l'extension 17 soit logée dans le logement 16 : le dispositif de fixation est alors verrouillé.

Selon un mode de réalisation préférentiel, le dispositif de fixation 18 comprend encore un moyen élastique 5, ici une pièce en élastomère. Ce moyen 5 est disposé de manière à être comprimé, selon l'axe Z, entre le carter 3 et la caisse 11 lors de la mise en place de la came 4 dans le logement 16, afin de créer, lors de la détente du moyen élastique 5, une force d'appui de l'extension 17 de ladite came 4 contre la paroi dudit logement 16. Ainsi tel qu'illustré à la figure 8, le dispositif 18 est déplacé par un appui selon l'axe Z, vers le haut dans le plan de la figure, afin d'une part de comprimer le moyen élastique 5 et d'autre part de permettre à la came 4 d'être placée en regard du logement 16 pour permettre une rotation qui va permettre sa mise en place. Cette rotation effectuée, comme illustré à la figure 9, ledit appui peut être relâché, provoquant une détente partielle du moyen élastique 5. L'extension 17 de la came 4 vient en contact selon l'axe Z avec une face du logement 16. La compression résiduelle du moyen élastique 5 produit alors un appui de l'extension 17 de ladite came 4 contre la paroi dudit logement 16. Le dispositif de fixation 18 est maintenu en position, relativement à la caisse 11, sous l'action combinée du centrage de la forme de centrage 13 en relation avec la forme complémentaire 14, et du contact de la came 4 dans le logement 16. L'appui additionnel dû au moyen élastique 5 renforce ce maintien en position et rend la fixation plus résistante aux chocs et vibrations pouvant se produire sur un véhicule 19.

La pièce élastomère 5 est assemblée avec l'arbre 1 au moyen des vis 7. Les deux entretoises 6 intercalées présentent une hauteur sensiblement égale à l'épaisseur de la pièce 5 au droit de la fixation, afin que le serrage des vis 7 ne déforme pas ladite pièce 5.

Une plaque 8 est avantageusement disposée au dessus de la pièce élastomère 5 afin de la protéger et de répartir la compression. Elle est assemblée sur la pièce 5 par tout moyen connu, par exemple collage ou vulcanisation.

Selon une disposition avantageuse, le pack batterie 20 et le carter 3 sont disposés sous la caisse 11. Ainsi le pack batterie 20 est protégé et un montage/démontage par le dessous du véhicule est possible, par exemple au moyen d'un pont ou depuis une fosse.

Afin de pouvoir mettre en place les centrages des formes de centrage 13 en relation avec les formes complémentaires 11, les axes Z des dispositifs de fixation 18 de la pluralité sont avantageusement parallèles.

Afin de combiner, les avantages d'un accès par en dessous et de plus une utilisation de la gravité pour la mise en place/remplacement d'un pack batterie 20, le pack batterie 20 étant alors simplement posé sur le carter 3, l'axe Z des dispositifs de fixation 18 est avantageusement vertical.

Un système de fixation 18 tel que précédemment décrit permet avantageusement de développer un procédé de montage et/ou de démontage automatique, sans aucune intervention manuelle.

Le montage comprend les étapes successives suivantes. Le pack batterie 20 composé du carter 3 muni de batteries est placé sur une platine 10 à proximité de la caisse 11, de préférence à proximité de la zone de mise en place sur le véhicule 19. La platine 10 est mobile et est déplacée afin d'aligner l'axe de chaque forme de centrage 13 d'un dispositif de fixation 18 avec l'axe de la forme complémentaire 14 correspondante réalisée dans la caisse 11. La platine 10 est ensuite déplacée parallèlement à elle-même, afin de se rapprocher de la caisse 11, par un déplacement en translation selon l'axe Z. Ceci réalise l'introduction desdites formes de centrage 13 dans lesdites formes complémentaires 14 de la caisse 11. Dans le cas d'un mode de réalisation avec un moyen élastique 5, ce dernier est comprimé lors de ce déplacement. Tout en maintenant ainsi le pack batterie 20, l'arbre 1 de chaque dispositif de fixation 18 est tourné, par exemple au moyen d'un outil 12 engagé dans l'empreinte 15, afin d'engager l'extension 17 de la came 4 dans le logement 16 correspondant de la caisse 11. Un seul outil 12 peut séquentiellement opérer la rotation de toutes les cames 4. Alternativement, jusqu'à un outil 12 par dispositif 18 peut être employé. Le pack batterie 20 est à ce stade fixé à la caisse 11, et la platine 10 peut être retirée. Si un moyen élastique 5 est utilisé, le retrait de la platine réalise une détente partielle dudit moyen élastique 5 qui laisse subsister une compression partielle du moyen élastique 5 qui produit un appui de la came 4 dans le logement 16 et vient ainsi renforcer la fixation.

Le démontage comprend des étapes sensiblement inverses de celle du montage. Il comprend les étapes successives suivantes. La platine 10 est mise en place en contact avec le carter 3 du pack batterie 20. Dans le cas d'utilisation de moyen élastique 5, une étape supplémentaire réalise un déplacement de la platine 10 selon l'axe Z en s'approchant de la caisse 11 afin de comprimer, les moyens élastiques 5 et d'aligner les cames 4 avec les logements 16, afin de supprimer l'appui précédemment décris, afin de faciliter le dégagement des cames 4. Les arbres 1 des dispositifs 18 de fixation sont ensuite tournés, par exemple au moyen d'un ou plusieurs outils 12 engagé chacun dans une empreinte 15, afin de tourner les cames 4 de manière à déloger l'extension 17 hors du logement 16 correspondant. La platine 10 est ensuite déplacée selon l'axe Z, en s'éloignant de la caisse 11, afin d'extraire les formes de centrage 13 des formes complémentaires 14 correspondantes de la caisse 11. Le pack batterie 20 est alors détaché de la caisse et un retrait de la platine 10 permet sa dépose.

Il apparaît à l'homme du métier que les étapes de montage/démontage peuvent être réalisées de manière manuelle mais aussi avantageusement de manière totalement automatisée.

## Revendications

1. Système de fixation d'un pack de batterie (20) à une caisse (11), ledit pack de batterie (20) comprenant un carter (3), le carter (3) et la caisse (11) délimitant entre eux un espace apte à accueillir des batteries, ledit carter étant muni d'une pluralité d'au moins un dispositif de fixation (18) du carter (3) sur la caisse (11) selon un axe (Z), **caractérisé en ce que** chaque dispositif de fixation (18) comprend:
- un arbre (1) solidaire dudit carter (3) tout en étant libre en rotation autour de l'axe (Z) relativement audit carter (3), présentant à une de ses extrémités une forme de centrage (13) de révolution autour de l'axe (Z) apte à coopérer avec une forme complémentaire (14) présente sur la caisse (11), et à son autre extrémité une empreinte (15) apte à accueillir un outil (12) d'entraînement en rotation autour de l'axe (Z);
- une came (4) solidaire de et entraînée par l'arbre (1) en rotation autour de l'axe (Z) et présentant une extension (17) sensiblement plane dans un plan perpendiculaire à l'axe (Z) apte à venir, en fonction de l'angle de rotation dudit arbre (1), se loger ou se déloger, dans un logement (16) réalisé dans la caisse (11) sensiblement plan et perpendiculaire à l'axe (Z),
et **en ce que** la caisse (11) est munie d'une même pluralité de forme complémentaire (14) et de logement (16) en regard de chaque dispositif de fixation (18).

2. Système selon la revendication 1, **caractérisé en ce que** chaque dispositif de fixation (18) comprend encore un moyen élastique (5) disposé de manière à être comprimé, selon l'axe (Z), entre le carter (3) et la caisse (11), lors de la mise en place de la came (4) dans le logement (16), afin de créer, lors de sa détente, une force d'appui de l'extension (17) de ladite came (4) contre la paroi dudit logement (16).

3. Système selon la revendication 1 ou 2, **caractérisé en ce que** le carter (3) est disposé sous la caisse (11).

4. Système selon l'une quelconque des revendications 1 à 3, **caractérisé en ce que** les axes (Z) des dispositifs de fixation (18) de la pluralité sont parallèles.

5. Système selon l'une quelconque des revendications 1 à 4, **caractérisé en ce que** l'axe (Z) des dispositifs de fixation (18) est vertical.

6. Procédé de montage automatisable d'un pack batterie (20) comprenant un système de fixation selon l'une quelconque des revendications 1 à 5, **caractérisé en ce qu'**il comprend les étapes suivantes:
- mise en place du carter (3) équipé de batteries sur une platine (10), à proximité de la caisse (11),
- déplacement de la platine (10) afin d'aligner chaque forme de centrage (13) de la pluralité de dispositif de fixation (18) du carter (3) avec une forme complémentaire (14) correspondante de la caisse (11),
- déplacement de la platine (10) selon l'axe (Z) afin d'introduire chaque forme de centrage (13) de la pluralité de dispositif de fixation (18) du carter (3) dans la forme complémentaire (14) correspondante de la caisse (11),
- rotation de chaque arbre (1) au moyen d'un outil (12) engagé dans chaque empreinte (15) de telle manière à mettre en place chaque came (4) de la pluralité dans chaque logement (16) correspondant,
- retrait de la platine (10).

7. Procédé selon la revendication 6, **caractérisé en ce que** le déplacement de la platine (10) selon l'axe (Z) s'effectue en comprimant, le cas échéant, chaque moyen élastique (5), et **en ce que** le retrait de la platine (10) s'effectue en détendant, le cas échéant, chaque moyen élastique (5).

8. Procédé de démontage automatisable d'un pack de batterie (20) comprenant un système de fixation selon l'une quelconque des revendications 1 à 5, **caractérisé en ce qu'**il comprend les étapes suivantes:
- mise en place d'une platine (10) en contact avec le carter (3),
- rotation de chaque arbre (1) au moyen d'un outil (12) engagé dans chaque empreinte (15) de telle manière à déloger chaque came (4) de la pluralité hors de chaque logement (16) correspondant,
- déplacement de la platine (10) selon l'axe (Z), afin d'extraire chaque forme de centrage (13) de la pluralité de dispositif de fixation (18) du carter (3) de la forme complémentaire (14) correspondante de la caisse (11),
- retrait de la platine (10) emportant le pack batterie (20).

9. Procédé selon la revendication 8, **caractérisé en ce que** l'étape de rotation est précédée par un déplacement de la platine (10) selon l'axe (Z) en comprimant, le cas échéant, chaque moyen élastique (5), et **en ce que** le retrait de la platine (10) s'effectue en détendant, le cas échéant, chaque moyen élastique (5).

## Claims

1. System for attaching a battery pack (20) to a bodyshell (11), said battery pack (20) comprising a housing (3), the housing (3) and the bodyshell (11) delimiting between them a space capable of receiving batteries, said housing being furnished with a plurality of at least one device (18) for attaching the housing (3) to the bodyshell (11) on an axis (Z), ***characterized in that*** each attachment device (18) comprises:
- a shaft (1) secured to said housing (3) while being free to rotate about the axis (Z) relative to said housing (3), having at one of its ends a centering shape (13) of revolution about the axis (Z) capable of interacting with a complementary shape (14) present on the bodyshell (11), and at its other end a recess (15) capable of receiving a tool (12) for rotation about the axis (Z);
- a cam (4) secured to and rotated by the shaft (1) about the axis (Z) and having a substantially flat extension (17) in a plane perpendicular to the axis (Z) capable, depending on the angle of rotation of said shaft (1), of being lodged in or dislodged from a casing (16) made in the bodyshell (11) which casing being substantially flat and perpendicular to the axis (Z), and **in that** the bodyshell (11) is furnished with one and the same plurality of complementary shape (14) and of casing (16) facing each attachment device (18).

2. System according to Claim 1, **characterized in that** each attachment device (18) also comprises an elastic means (5) placed so as to be compressed, on the axis (Z), between the housing (3) and the bodyshell (11) when the cam (4) is placed in the casing (16), in order to create, when it is relaxed, a bearing force for forcing the extension (17) of said cam (4) against the wall of said casing (16).

3. System according to Claim 1 or 2, **characterized in that** the housing (3) is placed underneath the bodyshell (11).

4. System according to any one of Claims 1 to 3, **characterized in that** the axes (Z) of the attachment devices (18) of the plurality are parallel.

5. System according to any one of Claims 1 to 4, **characterized in that** the axis (Z) of the attachment devices (18) is vertical.

6. Automatable method for mounting a battery pack (20) comprising an attachment system according to any one of Claims 1 to 5, **characterized in that** it comprises the following steps:
- placing the housing (3) fitted with batteries on a deck (10), close to the bodyshell (11),
- moving the deck (10) in order to align each centering shape (13) of the plurality of attachment devices (18) of the housing (3) with a corresponding complementary shape (14) of the bodyshell (11),
- moving the deck (10) along the axis (Z) in order to insert each centering shape (13) of the plurality of attachment devices (18) of the housing (3) into the corresponding complementary shape (14) of the bodyshell (11),
- rotating each shaft (1) by means of a tool (12) engaged in each recess (15) so as to place each cam (4) of the plurality in each corresponding casing (16),
- removing the deck (10).

7. Method according to Claim 6, **characterized in that** the movement of the deck (10) along the axis (Z) is carried out by compressing, if necessary, each elastic means (5) and **in that** the removal of the deck (10) is carried out by relaxing, if necessary, each elastic means (5).

8. Automatable method for dismounting a battery pack (20) comprising an attachment system according to any one of Claims 1 to 5, **characterized in that** it comprises the following steps:
- placing a deck (10) in contact with the housing (3),
- rotating each shaft (1) by means of a tool (12) engaged in each recess (15) so as to dislodge each cam (4) of the plurality from each corresponding casing (16),
- moving the deck (10) along the axis (Z) in order to extract each centering shape (13) of the plurality of attachment devices (18) of the housing (3) from the corresponding complementary shape (14) of the bodyshell (11),
- removing the deck (10) taking away the battery pack (20).

9. Method according to Claim 8, **characterized in that** the rotating step is preceded by a movement of the deck (10) along the axis (Z), compressing, if necessary, each elastic means (5), and **in that** the removal of the deck (10) is carried out by relaxing, if necessary, each elastic means (5).

## Patentansprüche

1. System zur Befestigung eines Batteriepacks (20) an einem Fahrzeugaufbau (11), wobei der Batteriepack (20) ein Gehäuse (3) enthält, wobei das Gehäuse (3) und der Fahrzeugaufbau (11) zwischen sich einen Raum begrenzen, der Batterien aufnehmen kann, wobei das Gehäuse mit einer Vielzahl mindestens einer Befestigungsvorrichtung (18) des Gehäuses (3) am Fahrzeugaufbau (11) gemäß einer Achse (Z) versehen ist, **dadurch gekennzeichnet, dass** jede Befestigungsvorrichtung (18) enthält:
- eine Welle (1), die fest mit dem Gehäuse (3) verbunden und gleichzeitig bezüglich des Gehäuses (3) um die Achse (Z) frei drehbar ist, die an einem ihrer Enden eine Zentrierform (13) drehsymmetrisch um die Achse (Z), die mit einer am Fahrzeugaufbau (11) vorhandenen komplementären Form (14) zusammenwirken kann, und an ihrem anderen Ende eine Vertiefung (15) aufweist, die ein Werkzeug (12) zum Drehantrieb um die Achse (Z) aufnehmen kann;
- eine Nockenscheibe (4), die fest mit der Welle (1) verbunden ist und von ihr um die Achse (Z) in Drehung versetzt wird und eine in einer Ebene lotrecht zur Achse (Z) im Wesentlichen ebene Ausdehnung (17) aufweist, die sich abhängig vom Drehwinkel der Welle (1) in eine Aufnahme (16) einfügen oder aus ihr austreten kann, die im Fahrzeugaufbau (11) im Wesentlichen eben und lotrecht zur Achse (Z) hergestellt ist,
und dass der Fahrzeugaufbau (11) mit einer gleichen Vielzahl von komplementären Formen (14) und Aufnahmen (16) gegenüber jeder Befestigungsvorrichtung (18) ausgestattet ist.

2. System nach Anspruch 1, **dadurch gekennzeichnet, dass** jede Befestigungsvorrichtung (18) noch eine elastische Einrichtung (5) enthält, die so angeordnet ist, dass sie beim Einsetzen der Nockenscheibe (4) in die Aufnahme (16) zwischen dem Gehäuse (3) und der Fahrzeugaufbau (11) gemäß der Achse (Z) zusammengedrückt wird, um bei ihrer Entspannung eine Auflagekraft der Ausdehnung (17) der Nockenscheibe (4) gegen die Wand der Aufnahme (16) zu erzeugen.

3. System nach Anspruch 1 oder 2, **dadurch gekennzeichnet, dass** das Gehäuse (3) unter dem Fahrzeugaufbau (11) angeordnet ist.

4. System nach einem der Ansprüche 1 bis 3, **dadurch gekennzeichnet, dass** die Achsen (Z) der Befestigungsvorrichtungen (18) der Vielzahl parallel sind.

5. System nach einem der Ansprüche 1 bis 4, **dadurch gekennzeichnet, dass** die Achse (Z) der Befestigungsvorrichtungen (18) senkrecht ist.

6. Verfahren zum automatisierbaren Einbau eines Batteriepacks (20), der ein Befestigungssystem nach einem der Ansprüche 1 bis 5 enthält, **dadurch gekennzeichnet, dass** es die folgenden Schritte enthält:
- Einsetzen des mit Batterien bestückten Gehäuses (3) auf einer Platte (10) in der Nähe des Fahrzeugaufbaus (11),
- Verschieben der Platte (10), um jede Zentrierform (13) der Vielzahl der Befestigungsvorrichtungen (18) des Gehäuses (3) mit einer entsprechenden komplementären Form (14) des Fahrzeugaufbaus (11) fluchtend auszurichten,
- Verschieben der Platte (10) gemäß der Achse (Z), um jede Zentrierform (13) der Vielzahl von Befestigungsvorrichtungen (18) des Gehäuses (3) in die entsprechende komplementäre Form (14) des Fahrzeugaufbaus (11) einzuführen,
- Drehen jeder Welle (1) mittels eines Werkzeugs (12), das in jede Vertiefung (15) eingeführt ist, um jede Nockenscheibe (4) der Vielzahl in jede entsprechende Aufnahme (16) einzusetzen,
- Entnahme der Platte (10).

7. Verfahren nach Anspruch 6, **dadurch gekennzeichnet, dass** die Verschiebung der Platte (10) gemäß der Achse (Z) erfolgt, indem ggf. jede elastische Einrichtung (5) zusammengedrückt wird, und dass die Entnahme der Platte (10) erfolgt, indem ggf. jede elastische Einrichtung (5) entspannt wird.

8. Verfahren zum automatisierbaren Ausbau eines Batteriepacks (20), der ein Befestigungssystem nach einem der Ansprüche 1 bis 5 enthält, **dadurch gekennzeichnet, dass** es die folgenden Schritte enthält:
- Einsetzen einer Platte (10) in Kontakt mit dem Gehäuse (3),
- Drehen jeder Welle (1) mittels eines in jede Vertiefung (15) eingeführten Werkzeugs (12), um jede Nockenscheibe (4) der Vielzahl aus jeder entsprechenden Aufnahme (16) zu entfernen,
- Verschieben der Platte (10) gemäß der Achse (Z), um jede Zentrierform (13) der Vielzahl von Befestigungsvorrichtungen (18) des Gehäuses (3) aus der entsprechenden komplementären Form (14) der Fahrzeugaufbau (11) herauszuziehen,
- Entnahme der Platte (10) unter Mitnahme des Batteriepacks (20).

9. Verfahren nach Anspruch 8, **dadurch gekennzeichnet, dass** vor dem Drehschritt eine Verschiebung der Platte (10) gemäß der Achse (Z) erfolgt, indem ggf. jede elastische Einrichtung (5) zusammengedrückt wird, und dass die Entnahme der Platte (10) erfolgt, indem ggf. jede elastische Einrichtung (5) entspannt wird.
